# FASCICULE DE BREVET EUROPEEN

(11) **EP 2 123 965 B1**
(45) Date de publication et mention de la délivrance du brevet: **09.06.2010**
(21) Numéro de dépôt: 09158730.3
(22) Date de dépôt: 24.04.2009
(51) Int. Cl.: F16L 55/46

(54) **Outillage d'insertion d'un dispositif de contrôle d'écoulement dans une canalisation fluide, et procédé de mise en oeuvre**
Einführwerkzeug für eine Stromsteuerungsvorrichtung in eine Fluidleitung und Durchführungsverfahren
Tool for introducing a flow-control device in a conduit and execution process

(30) Priorité: 20.05.2008 FR 0853278
(43) Date de publication de la demande: 25.11.2009
(73) Titulaire: GDF SUEZ, 75008 Paris (FR)
(72) Inventeur: Leme, David, 75016 Paris (FR); Daymard, Jean-François, 33290 Blanquefort (FR)
(74) Mandataire: Bentz, Jean-Paul

(56) Documents cités:
- WO-A-98/20295
- DE-A1- 19 723 700

## Description

L'invention concerne, de façon générale, les techniques liées à la gestion et à l'exploitation de réseaux de distribution de fluide, et en particulier de gaz.

Plus précisément, l'invention concerne, selon un premier aspect, un outillage pour installer, dans une canalisation de fluide, un dispositif de contrôle d'écoulement comprenant un corps creux doté d'une extrémité amont et d'une extrémité aval, une vanne intégrée au corps creux et conçue pour se fermer en réponse à un débit de fluide dans la canalisation excédant un débit limite maximal, un joint d'étanchéité à coupelle disposé à l'extrémité aval du corps creux, et une pluralité de pattes élastiques liées au corps creux entre les extrémités amont et aval de ce corps creux et conçues pour s'épanouir élastiquement par leurs extrémités libres tournées vers l'extrémité aval du corps creux, une fois le dispositif installé dans la canalisation, cet outillage comprenant un fourreau dans lequel le dispositif est initialement inséré par l'extrémité aval du corps creux dans une configuration préparatoire dans laquelle le joint et les pattes sont repliés radialement et contraints élastiquement dans le fourreau.

Un dispositif de contrôle d'écoulement du type concerné est illustré à la figure 3 et décrit dans la demande de brevet FR 2007/03767.

Après avoir été partiellement introduit dans un fourreau de contention radiale, comme décrit dans les documents de brevets FR 2 870 316 et FR 2007/03767, chaque dispositif de ce type doit être installé dans la canalisation dont il est destiné à contrôler le débit.

Un outillage pour installer, dans une canalisation du fluide, un dispositif de contrôle d'écoulement est connu de la demande internationale du brevet WO 98/20295.

Dans ce contexte, l'invention a notamment pour but de proposer un outillage permettant de procéder à cette installation de façon sûre et aisée.

A cette fin, l'outillage de l'invention est celui de la revendication 1.

Il est cependant judicieux de prévoir que l'outillage de l'invention comprenne en outre au moins une dérivation, un robinet d'arrêt et deux robinets de test, que la dérivation présente deux extrémités dont la première est reliée au sas, que le robinet d'arrêt soit installé sur la dérivation entre les extrémités de cette dérivation, que les deux robinets de test raccordent, en parallèle l'un de l'autre, la deuxième extrémité de la dérivation à la pression atmosphérique, et que les premier et deuxième robinets de test présentent des première et deuxième sections de passage respectives différentes dont la première autorise, en provenance de la canalisation, un débit de fluide au plus égal au débit limite maximal, et dont la deuxième autorise, en provenance de la canalisation, un débit de fluide supérieur au débit limite maximal.

Le tube du sas présente avantageusement un coude s'étendant entre le joint d'arrêt et la section terminale de guidage, la dérivation étant alors raccordée au sas entre le joint d'arrêt et le coude.

De préférence, la dérivation est également dotée d'une valve de gonflage disposée entre la première extrémité de la dérivation et le robinet d'arrêt.

Le tube du sas peut présenter, à distance de sa section terminale de guidage, une butée interne et un diamètre interne offrant à la fois un logement au vérin et une voie de circulation de fluide autour du vérin, la butée interne bloquant le mouvement du vérin vers le joint d'arrêt sans bloquer la circulation de fluide.

L'outillage de l'invention peut aussi comprendre un châssis et un dévidoir sur lequel le jonc est enroulé, ce dévidoir étant supporté à rotation sur le châssis.

Cet outillage peut également comprendre une canne télescopique conçue pour s'adapter au support et constituer un pied pour ce support.

Dans le cas où le châssis appartient à une mallette à roulettes, la canne télescopique peut être conçue pour s'adapter à la mallette et constituer un manche facilitant le déplacement de cette mallette.

L'invention concerne également un procédé de mise en oeuvre de l'outillage précédemment décrit pour insérer dans une canalisation de fluide un dispositif de contrôle d'écoulement partiellement introduit sous contrainte radiale dans un fourreau, ce procédé étant caractérisé en ce qu'il comprend les opérations consistant à : vérifier l'absence de dispositif de contrôle d'écoulement dans la canalisation; fermer le robinet de branchement dont est dotée la portion accessible de la canalisation; ouvrir une extrémité aval de la portion accessible de la canalisation disposée en aval du robinet de branchement; visser la deuxième extrémité du tube du sas sur l'extrémité aval de la portion accessible de la canalisation; pousser le jonc dans la canalisation pour y faire progresser le dispositif de contrôle d'écoulement à travers le robinet de branchement et la portion accessible; détecter une résistance à la progression du dispositif, révélatrice d'un dépassement de son point d'installation; tirer le jonc d'une distance prédéterminée pour placer le dispositif à son point d'installation; actionner la pompe pour augmenter la pression dans le jonc; attendre un temps prédéterminé; et tirer à nouveau le jonc pour rentrer le vérin dans le sas.

L'opération de traction du jonc peut être effectuée jusqu'à ce que le vérin soit bloqué par la butée interne, et le procédé peut comprendre en outre les opérations consistant à : ouvrir le robinet d'arrêt de la dérivation; ouvrir le premier robinet de test; vérifier que le fluide circule dans la canalisation et atteint ce premier robinet de test; ouvrir le deuxième robinet de test; vérifier que le fluide ne circule plus dans la canalisation et n'atteint pas le deuxième robinet de test; et refermer les robinets de test et le robinet d'arrêt de la dérivation.

Dans le cas où le procédé est mis en oeuvre avec l'outillage le plus complet, ce procédé comprend en outre les opérations consistant à injecter du fluide dans le sas à travers la valve de gonflage jusqu'à atteindre une pression prédéterminée dans le sas; ouvrir le robinet d'arrêt de la dérivation; ouvrir le premier robinet de test; vérifier que le fluide circule dans la canalisation et atteint ce premier robinet de test; refermer le premier robinet de test et le robinet d'arrêt de la dérivation; refermer le robinet de branchement de la portion accessible de la canalisation; dévisser la deuxième extrémité du tube du sas de l'extrémité aval de la portion accessible de la canalisation; refermer l'extrémité aval de la portion accessible de la canalisation; et rouvrir le robinet de branchement.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique d'un outillage conforme à un mode de réalisation préféré de l'invention, illustré dans son contexte d'application privilégié;
- la figure 2 est une vue schématique d'une canalisation à laquelle l'outillage de l'invention est typiquement adapté;
- la figure 3 est une vue en perspective d'un dispositif de contrôle d'écoulement dont l'outillage de l'invention permet la mise en place dans une canalisation;
- les figures 4 et 5 sont des vues schématiques en coupe partielles d'un outillage conforme au mode de réalisation préféré de l'invention;
- les figures 6A à 6C sont des vues à échelles agrandies de détails de l'outillage illustré aux figures 4 et 5;
- la figure 7 est une vue schématique partielle de l'outillage conforme au mode de réalisation préféré de l'invention;
- la figure 8 représente un vérin utilisé dans l'outillage illustré à la figure 7 et non visible sur cette figure;
- la figure 9 illustre à échelle agrandie un vérin utilisé dans un outillage conforme à l'invention, représenté dans une phase de mise en place, dans une canalisation, d'un dispositif de contrôle d'écoulement tel qu'illustré à la figure 3; et
- la figure 10 illustre l'agencement de robinets de test utilisés dans un outillage conforme au mode de réalisation préféré de l'invention.

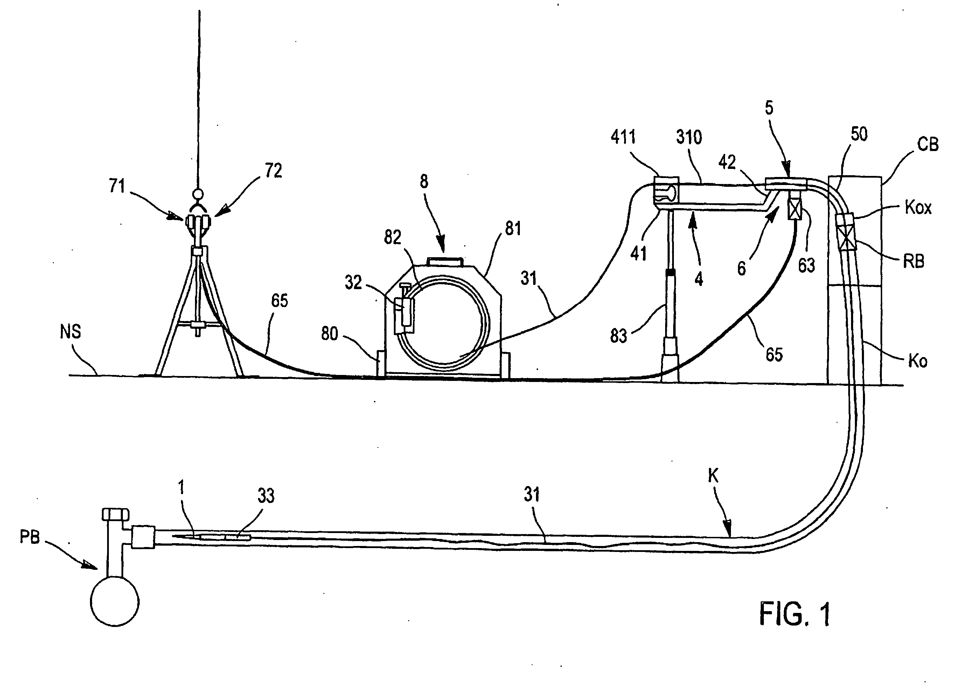

Comme annoncé précédemment, l'invention concerne un outillage permettant d'installer (figure 1) un dispositif 1 de contrôle d'écoulement dans une canalisation de fluide K, typiquement constituée par une installation de distribution de gaz.

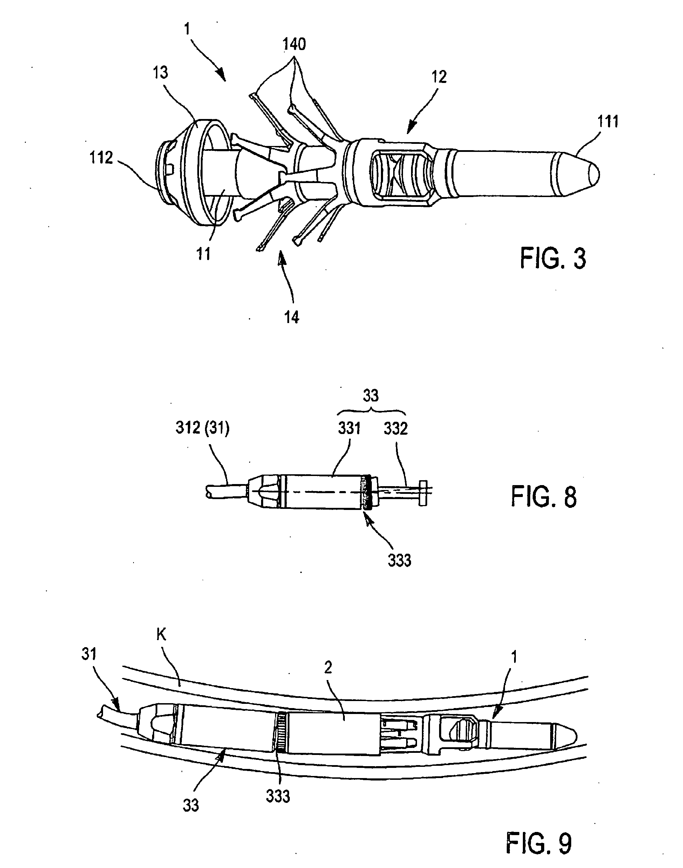

Le dispositif de contrôle d'écoulement 1 du type concerné a été décrit dans la demande de brevet FR 2007/03767, et se trouve notamment illustré à la figure 3.

Un tel dispositif 1 comprend typiquement un corps creux 11, une vanne 12, un joint d'étanchéité à coupelle 13, et une pluralité de pattes élastiques 14.

Le corps creux 11 présente une extrémité amont 111 formant un nez d'introduction, et une extrémité aval 112 portant le joint d'étanchéité à coupelle 13.

La vanne 12, qui est installée dans le corps creux 11, est conçue pour se fermer et corrélativement pour obturer le corps creux 11 lorsque le débit de fluide dans la canalisation K excède une valeur limite prédéterminée.

Le joint d'étanchéité à coupelle 13, qui entoure le corps creux 11 et qui s'applique sur la paroi interne de la canalisation K, force le fluide circulant dans la canalisation à traverser le corps creux 11, la circulation de fluide étant ainsi bloquée lorsque la vanne 12 obture le corps creux 11.

Les pattes élastiques 14, qui sont liées au corps creux 11 entre les extrémités amont 111 et aval 112 de ce corps creux 11, sont conçues pour s'épanouir élastiquement, par leurs extrémités libres 140 tournées vers l'extrémité aval 112 du corps creux 11, une fois le dispositif 1 installé dans la canalisation, et donc pour maintenir ce dispositif en place dans la canalisation.

Néanmoins, pour pouvoir être inséré dans une canalisation, un tel dispositif 1 doit au préalable avoir été partiellement introduit dans un fourreau 2 (figure 9), le joint 13 et les pattes 14 étant alors repliés radialement et contraints élastiquement dans ce fourreau 2.

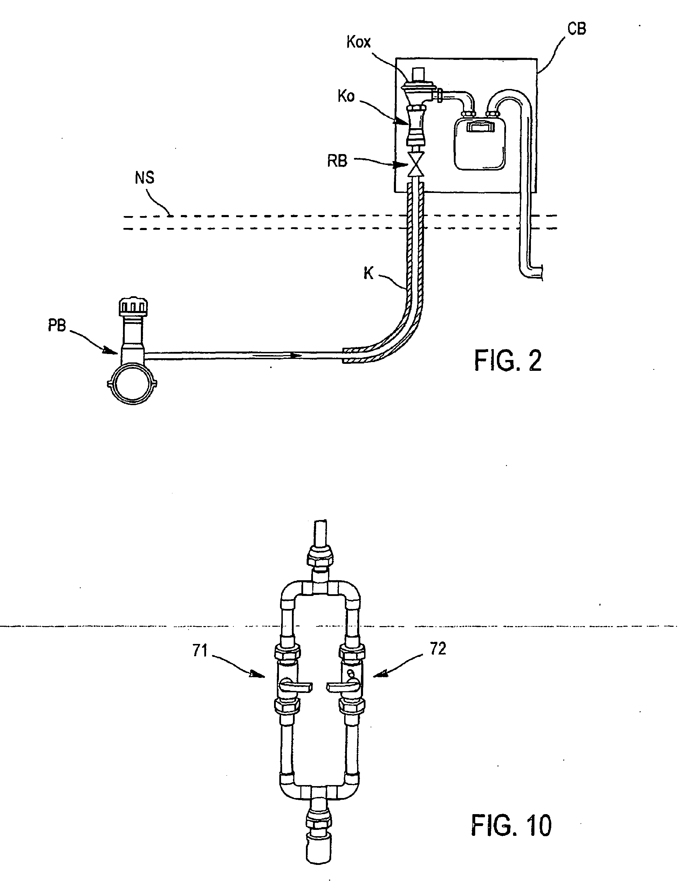

L'outillage de l'invention est particulièrement bien adapté à l'insertion d'un dispositif de contrôle d'écoulement 1 tel qu'illustré à la figure 3 dans une installation de distribution.de gaz telle qu'illustrée à la figure 2 et plus schématiquement à la figure 1.

Une telle installation comprend typiquement une prise de branchement PB alimentant en gaz un coffret de branchement CB à travers un tuyau de branchement qui constitue en l'occurrence la canalisation K.

Au dessus du niveau du sol NS, la canalisation K présente une portion de canalisation accessible Ko sur laquelle est installé un robinet de branchement RB permettant d'isoler de la prise de branchement PB une extrémité Kox de la portion Ko, située le plus en aval de la prise de branchement PB dans le sens de circulation du gaz.

L'outillage de l'invention permet, comme illustré à la figure 1, d'insérer dans la canalisation K, à travers le robinet RB, et en l'ayant introduit dans l'extrémité aval Kox de la portion de canalisation accessible Ko, un dispositif 1 de contrôle d'écoulement de gaz tel qu'illustré à la figure 3.

Outre le fourreau 2, un tel outillage comprend notamment un jonc 31 creux semi-flexible, une pompe 32, un manomètre 321, un vérin 33, un support 4, un compteur métrique 411, et un sas d'introduction 5.

La pompe 32, qui est reliée à une première extrémité 311 du jonc 31, permet de contrôler la pression à l'intérieur du jonc 31, c'est-à-dire de la faire varier à volonté.

Le manomètre 321, qui est de préférence monté sur la pompe 32, est soumis à la pression régnant à l'intérieur du jonc 31 et permet donc de connaître en permanence cette pression.

Le vérin 33 (figure 8), qui est installé à la deuxième extrémité 312 du jonc 31, comprend un cylindre 331 soumis à la pression régnant dans le jonc 31 et dans lequel coulisse un piston 332.

Comme le montre une comparaison des figures 3 et 9, le fourreau 2 est lié, par exemple par vissage, au cylindre 331 du vérin 33 du côté de l'extrémité aval 112 du dispositif 1.

Le piston 332, qui adopte donc dans le cylindre 331 du vérin 33 une position dépendant de la pression régnant dans le jonc 31, est ainsi propre à éjecter sur commande le dispositif 1 hors du fourreau 2.

Pour faciliter son passage dans les courbes de la canalisation K, le vérin 33 peut présenter une ou plusieurs articulations 333, comme le montrent notamment les figures 8 et 9.

Le compteur métrique 411, qui est porté par une première extrémité 41 du support 4, est traversé à coulissement par le jonc 31 et mesure l'amplitude de tout mouvement de coulissement de ce jonc dans ce compteur, en tenant compte du sens de ce coulissement.

Le sas 5 est porté par une deuxième extrémité 42 du support 4, qui est également traversée à coulissement par le jonc 31.

Entre les deux extrémités 41 et 42 du support 4, le jonc 31 présente une section longitudinale 310 qui est accessible à tout opérateur et qui peut être poussée ou tirée pour permettre d'introduire le vérin 33 dans la canalisation K ou de l'en extraire.

Le sas d'introduction 5 comprend notamment un tube 50 traversé par l'extrémité 312 du jonc 31 portant le vérin 33.

La première extrémité 51 de ce tube 50 est portée par l'extrémité 42 du support 4 et comporte un joint d'arrêt 511, tel qu'un presse-étoupe, qui est traversé à coulissement par le jonc 31.

Ce tube 50 comporte par ailleurs, à sa deuxième extrémité 52, un chemisage interne formant une section terminale de guidage 500 rectiligne et rigide, propre à guider le vérin 33 de façon précise suivant son axe.

La deuxième extrémité 52 du tube 50 est en outre conçue pour être vissée de façon étanche sur l'extrémité Kox de la portion accessible Ko de la canalisation K d'une façon telle que cette portion de canalisation Ko soit disposée exactement dans le prolongement de la section terminale de guidage 500 du tube 50.

Dans son mode de réalisation préféré, l'outillage de l'invention comprend en outre une dérivation 6, un robinet d'arrêt 63 et deux robinets de test 71 et 72.

La dérivation 6 communique avec le sas 5 auquel elle est reliée par sa première extrémité 61.

Le robinet d'arrêt 63 est installé sur la dérivation 6 entre les extrémités 61 et 62 de cette dérivation 6, et permet donc d'isoler ces deux extrémités l'une de l'autre.

Les deux robinets de test 71 et 72, qui sont reliés à la deuxième extrémité 62 de la dérivation 6 par exemple à travers un tuyau flexible 65, raccordent, en parallèle l'un de l'autre, cette deuxième extrémité 62 de la dérivation 6 à la pression atmosphérique.

Les robinets de test 71 et 72 présentent des sections de passage différentes.

Plus précisément, le premier robinet de test 71 autorise, en provenance de la canalisation K, un débit de fluide au plus égal au débit limite maximal qui caractérise l'absence d'anomalie, tandis que le deuxième robinet de test 72 autorise, en provenance de la canalisation K, un débit de fluide supérieur à ce débit limite maximal.

Le tube 50 du sas 5 présente par exemple un coude 53 qui s'étend entre le joint d'arrêt 511 et la section terminale de guidage 500, la dérivation 6 étant raccordée au sas 5 entre ce joint d'arrêt 511 et ce coude 53.

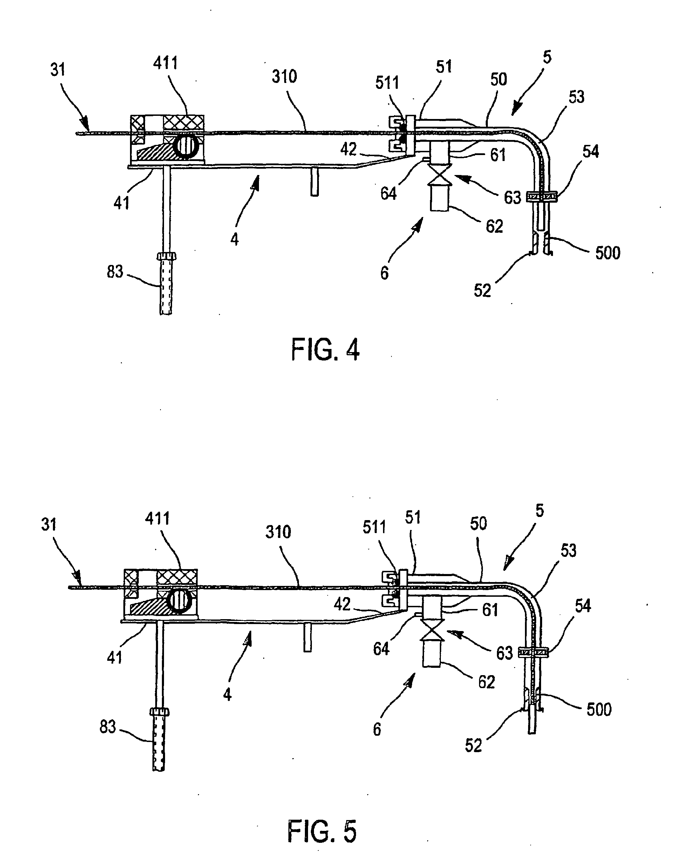

Par ailleurs, comme le montrent notamment les figures 4 et 5, la dérivation 6 est de préférence dotée d'une valve de gonflage 64 disposée entre la première extrémité 61 de la dérivation 6 et le robinet d'arrêt 63.

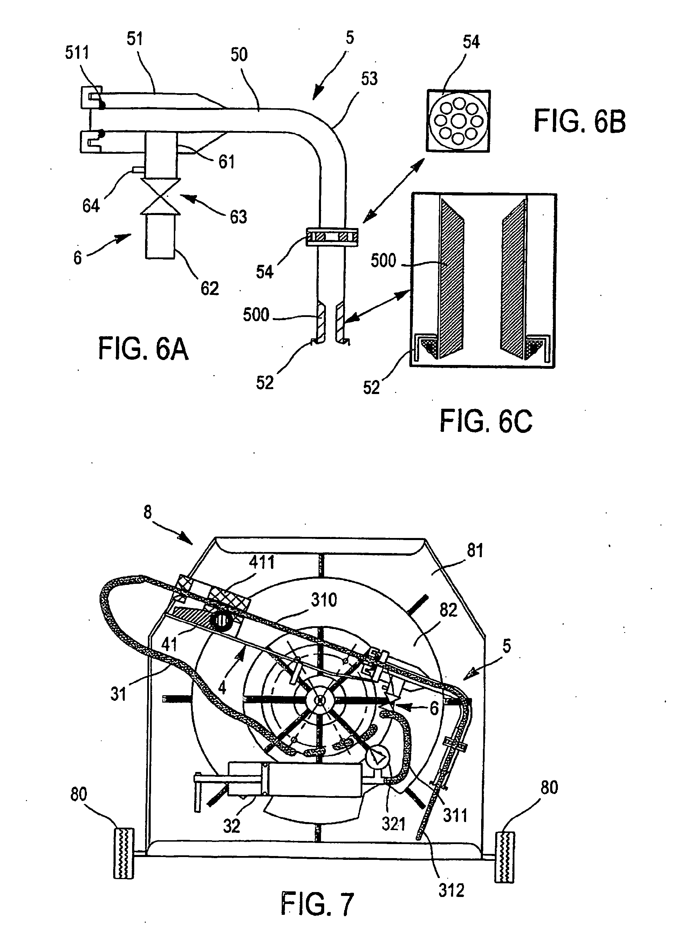

A distance de sa section terminale de guidage 500, le tube 50 du sas 5 présente avantageusement (figures 6A et 6B) une butée interne 54 propre à bloquer tout mouvement de retrait du vérin 33 en direction du joint d'arrêt 511.

Entre cette butée interne 54 et sa section terminale de guidage 500, le tube 50 présente un diamètre interne offrant à la fois un logement au vérin 33 et une voie de circulation de fluide autour du vérin 33, la butée interne 54 étant elle-même conçue pour ne pas bloquer cette circulation de fluide.

Comme le montrent les figures 1 et 7, l'outillage de l'invention peut encore comprendre un châssis 81 et un dévidoir 82 sur lequel le jonc 31 est enroulé, ce dévidoir 82 étant supporté à rotation sur le châssis 81.

Dans le mode de réalisation préféré de l'invention, le châssis 81 appartient à une mallette 8 qui est dotée de roulettes 80.

Une canne télescopique 83, visible sur les figures 1, 4, et 5, peut être prévue aussi bien pour s'adapter au support 4 et constituer un pied pour ce support 4, que pour s'adapter à la mallette 8 et constituer un manche facilitant le déplacement de cette mallette 8.

L'invention concerne également un procédé de mise en oeuvre de l'outillage tel que précédemment décrit en vue d'insérer, dans une canalisation de gaz K, un dispositif 1 de contrôle d'écoulement partiellement introduit sous contrainte radiale dans un fourreau 2.

Ce procédé comprend notamment les opérations suivantes :
(a) vérifier l'absence de dispositif 1 de contrôle d'écoulement dans la canalisation K;
(b) fermer le robinet de branchement RB dont est dotée la portion accessible Ko de la canalisation K;
(c) ouvrir l'extrémité aval Kox de la portion accessible Ko de la canalisation K, c'est-à-dire l'extrémité de cette portion de canalisation qui est disposée en aval du robinet de branchement RB;
(d) visser la deuxième extrémité 52 du tube 50 du sas 5 sur l'extrémité aval Kox de cette portion accessible Ko de la canalisation K;
(e) agir sur la section longitudinale accessible 310 du jonc 31 pour pousser ce jonc dans la canalisation K et y faire progresser le dispositif 1 de contrôle d'écoulement à travers le robinet de branchement RB et la portion accessible Ko;
(f) détecter une résistance à la progression du dispositif 1, cette résistance indiquant que le dispositif 1 bute sur la paroi verticale de la prise de branchement PB et qu'il a donc dépassé son point d'installation optimal dans la canalisation K;
(g) tirer le jonc 31 d'une distance prédéterminée pour reculer le dispositif 1 et le replacer à son point d'installation optimal dans la canalisation K;
(h) actionner la pompe 32 pour augmenter la pression dans le jonc 31;
(i) attendre un temps prédéterminé pour permettre au piston 332 du vérin 33 de vaincre, sous l'effet de la pression régnant dans le jonc 31, les forces de frottement qui tendent à retenir le dispositif 1 dans le fourreau 2, et de se déplacer en éjectant ce dispositif hors de ce fourreau; et
(j) tirer à nouveau le jonc 31 pour rentrer le vérin 33 dans le sas 5 jusqu'à ce qu'il soit bloqué par la butée 54.

Dans le cas préféré où l'installation du dispositif 1 dans la canalisation K inclut la vérification des performances de ce dispositif, le procédé de l'invention comprend en outre les opérations suivantes :
(k) ouvrir le robinet d'arrêt 63 de la dérivation 6;
(1) ouvrir le premier robinet de test 71, qui fait communiquer la canalisation K avec l'atmosphère en n'autorisant qu'un débit de gaz normal;
(m) vérifier que le gaz circule dans la canalisation K et atteint ce premier robinet de test 71, ce qui confirme que le dispositif 1 n'obstrue pas la canalisation K et que la vanne 12 laisse passer tout débit de gaz dont la valeur est inférieure au seuil d'anomalie;
(n) ouvrir le deuxième robinet de test 72, qui fait communiquer la canalisation K avec l'atmosphère en autorisant un débit de gaz anormalement élevé;
(o) vérifier que le fluide ne circule plus dans la canalisation K et n'atteint pas le deuxième robinet de test 72, ce qui confirme que la vanne 12 remplit correctement sa fonction; et
(p) refermer les robinets de test 71, 72 et le robinet d'arrêt 63 de la dérivation 6.

Si l'opération (o) est effectivement réalisée avec succès, le dispositif 1 est placé dans une configuration dans laquelle la vanne 12 isole le coffret de branchement CB de la prise de branchement PB.

Il est donc généralement nécessaire de replacer le dispositif 1 dans une configuration dans laquelle la vanne 12 laisse passer tout débit normal de gaz.

Pour ce faire, le procédé de l'invention comprend alors les opérations additionnelles suivantes:
(q) injecter du gaz ou de l'air dans le sas 5 à travers la valve de gonflage 64, jusqu'à ce que le sas 5 et la canalisation K atteignent une pression prédéterminée pour laquelle la vanne 12 du dispositif 1 s'ouvre à nouveau;
(r) ouvrir le robinet d'arrêt 63 de la dérivation 6;
(s) ouvrir le premier robinet de test 71;
(t) vérifier que le fluide circule dans la canalisation K et atteint ce premier robinet de test 71;
(u) refermer le premier robinet de test 71 et le robinet d'arrêt 63 de la dérivation 6;
(v) refermer le robinet de branchement RB de la portion accessible Ko de la canalisation K;
(w) dévisser la deuxième extrémité 52 du tube 50 du sas 5 de l'extrémité aval Kox de la portion accessible Ko de la canalisation K;
(x) refermer l'extrémité aval Kox de la portion accessible Ko de la canalisation K; et
(y) rouvrir le robinet de branchement RB.

Bien que diverses techniques soient connues pour mettre en oeuvre l'opération (a), l'homme du métier comprendra à la lecture de la présente description que cette opération peut aussi être réalisée en utilisant l'outillage de l'invention et en mettant en oeuvre la séquence des opérations (k) à (o) telles que décrites précédemment.

## Revendications

1. Outillage pour installer, dans une canalisation de fluide (K), un dispositif (1) de contrôle d'écoulement comprenant un corps creux (11) doté d'une extrémité amont (111) et d'une extrémité aval (112), une vanne (12) intégrée au corps creux (11) et conçue pour se fermer en réponse à un débit de fluide dans la canalisation (K) excédant un débit limite maximal, un joint d'étanchéité à coupelle (13) disposé à l'extrémité aval (112) du corps creux (11), et une pluralité de pattes élastiques (14) liées au corps creux (11) entre les extrémités amont (111) et aval (112) de ce corps creux (11) et conçues pour s'épanouir élastiquement par leurs extrémités libres (140) tournées vers l'extrémité aval (112) du corps creux (11), une fois le dispositif (1) installé dans la canalisation, cet outillage comprenant un fourreau (2) dans lequel le dispositif (1) est initialement inséré par l'extrémité aval (112) du corps creux (1) dans une configuration préparatoire dans laquelle le joint (13) et les pattes (14) sont repliés radialement et contraints élastiquement dans le fourreau (2), cet outillage comprenant un jonc (31) creux semi-flexible, une pompe (32) reliée à une première extrémité (311) du jonc (31) et propre à contrôler la pression à l'intérieur du jonc, un manomètre (321) soumis à la pression régnant à l'intérieur du jonc (31), un vérin (33) installé à une deuxième extrémité (312) du jonc (31) et comprenant un cylindre (331) soumis à la pression régnant dans le jonc (31) et un piston (332), le fourreau (2) étant vissé sur le cylindre (331) de ce vérin (33) du côté de l'extrémité aval (112) du dispositif (1), un support (4) dont une première extrémité (41) porte un compteur métrique (411) traversé à coulissement par le jonc (31) et dont une deuxième extrémité (42) est également traversés à coulissement par le jonc (31), et un sas d'introduction (5) comprenant au moins un tube (50) traversé par l'extrémité (312) du jonc (31) portant le vérin (33) et présentant, au moins une section terminale de guidage (500) rectiligne et rigide, une première extrémité (51) du tube (50) étant portée par le support (4) et comportant un joint d'arrêt (511) tel qu'un presse-étoupe traversé à coulissement par le jonc (31), et une deuxième extrémité (52) du tube (50) comportant la section terminale de guidage (500) est étant propre à être vissée de façon étanche sur une portion accessible (Ko) de la canalisation (K) disposée dans le prolongement de cette section terminale de guidage (500), le jonc (31) présentant, entre les deux extrémités (41, 42) du support (4), une section longitudinale (310) accessible et susceptible d'être poussée ou tirée pour introduire le vérin (33) dans la canalisation (K) ou l'en extraire, et le piston (332) du vérin (33) adoptant dans le cylindre: (331) du vérin (33) une position dépendant de la pression dans le jonc (31) est étant propre à éjecter sélectivement le dispositif (1) hors du fourreau (2).

2. Outillage suivant la revendication 1, **caractérisé en ce qu'**il comprend en outre au moins une dérivation (6), un robinet d'arrêt (63) et deux robinets de test (71, 72), **en ce que** la dérivation (6) présente deux extrémités (61, 62) dont la première (61) est reliée au sas (5), **en ce que** le robinet d'arrêt (63) est installé sur la dérivation (6) entre les extrémités (61, 62) de cette dérivation (6), **en ce que** les deux robinets de test (71, 72) raccordent, en parallèle l'un de l'autre, la deuxième extrémité (62) de la dérivation (6) à la pression atmosphérique, et **en ce que** les premier et deuxième robinets de test (71, 72) présentent des première et deuxième sections de passage respectives différentes dont la première autorise, en provenance de la canalisation (K), un débit de fluide au plus égal au débit limite maximal, et dont la deuxième autorise, en provenance de la canalisation (K), un débit de fluide supérieur au débit limite maximal.

3. Outillage suivant la revendication 2, **caractérisé en ce que** le tube (50) du sas (5) présente un coude (53) s'étendant entre le joint d'arrêt (511) et la section terminale de guindage (500), et **en ce que** la dérivation (6) est raccordée au sas (5) entre le joint d'arrêt (511) et le coude (53).

4. Outillage suivant l'une quelconque des revendications 2 et 3, **caractérisé en ce que** la dérivation (6) est dotée d'une valve de gonflage (64) disposée entre la première extrémité (61) de la dérivation (6) et le robinet d'arrêt (63).

5. Outillage suivant l'une quelconque des revendications 2 à 4, **caractérisé en ce que** le tube (50) du sas (5) présente, à distance de sa section terminale de guidage (500), une butée interne (54) et un diamètre interne offrant à la fois un logement au vérin (33) et une voie de circulation de fluide autour du vérin (33), et **en ce que** la butée interne (54) bloque le mouvement du vérin (33) vers le joint d'arrêt (511) sans bloquer la circulation de fluide.

6. Outillage suivant l'une quelconque des revendications précédentes, **caractérisé en ce qu'**il comprend un châssis (81) et un dévidoir (82) sur lequel le jonc (31) est enroulé, ce dévidoir (82) étant supporté à rotation sur le châssis (81).

7. Outillage suivant l'une quelconque des revendications précédentes, **caractérisé en ce qu'**il comprend en outre une canne télescopique (83) conçue pour s'adapter au support (4) et constituer un pied pour ce support (4).

8. Outillage suivant les revendications 6 et 7, **caractérisé en ce que** le châssis (81) appartient à une mallette à roulettes (8) et **en ce que** la canne télescopique (83) est conçue pour s'adapter à la mallette (8) et constituer un manche facilitant le déplacement de cette mallette (8).

9. Outillage suivant l'une quelconque des revendications précédentes, **caractérisé en ce que** le vérin (33) présente au moins une articulation (333).

10. Procédé de mise en oeuvre de l'outillage suivant l'une quelconque des revendications précédentes pour insérer dans une canalisation de fluide (K) un dispositif (1) de contrôle d'écoulement partiellement introduit sous contrainte radiale dans un fourreau (2), **caractérisé en ce qu'**il comprend les opérations consistant à : vérifier l'absence de dispositif (1) de contrôle d'écoulement dans la canalisation; fermer le robinet de branchement (RB) dont est dotée la portion accessible (Ko) de la canalisation (K); ouvrir une extrémité aval (Kox) de la portion accessible (Ko) de la canalisation (K) disposée en aval du robinet de branchement (RB); visser la deuxième extrémité (52) du tube (50) du sas (5) sur l'extrémité aval (Kox) de la portion accessible (Ko) de la canalisation (K); pousser le jonc (31) dans la canalisation (K) pour y faire progresser le dispositif (1) de contrôle d'écoulement à travers le robinet de branchement (RB) et la portion accessible (Ko); détecter une résistance à la progression du dispositif (1), révélatrice d'un dépassement de son point d'installation; tirer le jonc (31) d'une distance prédéterminée pour placer le dispositif (1) à son point d'installation; actionner la pompe (32) pour augmenter la pression dans le jonc (31); attendre un temps prédéterminé; et tirer à nouveau le jonc (31) pour rentrer le vérin (33) dans le sas (5).

11. Procédé suivant la revendication 10 pour mettre en oeuvre l'outillage suivant l'une quelconque des revendications 1 à 9 combinée aux revendications 2 et 5, **caractérisé en ce que** l'opération de traction du jonc (31) est effectuée jusqu'à ce que le vérin (33) soit bloqué par la butée interne (54), et **en ce qu'**il comprend en outre les opérations consistant à : ouvrir le robinet d'arrêt (63) de la dérivation (6); ouvrir le premier robinet de test (71); vérifier que le fluide circule dans la canalisation (K) et atteint ce premier robinet de test (71); ouvrir le deuxième robinet de test (72); vérifier que le fluide ne circule plus dans la canalisation (K) et n'atteint pas le deuxième robinet de test (72); et refermer les robinets de test (71, 72) et le robinet d'arrêt (63) de la dérivation (6).

12. Procédé suivant la revendication 11 pour mettre en oeuvre l'outillage suivant l'une quelconque des revendications 1 à 9 combinée aux revendications 2, 4 et 5, **caractérisé en ce qu'**il comprend en outre les opérations consistant à injecter du fluide dans le sas (5) à travers la valve de gonflage (64) jusqu'à atteindre une pression prédéterminée dans le sas (5); ouvrir le robinet d'arrêt (63) de la dérivation (6); ouvrir le premier robinet de test (71); vérifier que le fluide circule dans la canalisation (K) et atteint ce premier robinet de test (71); refermer le premier robinet de test (71) et le robinet d'arrêt (63) de la dérivation (6); refermer le robinet de branchement (RB) de la portion accessible (Ko) de la canalisation (K); dévisser la deuxième extrémité (52) du tube (50) du sas (5) de l'extrémité aval (Kox) de la portion accessible (Ko) de la canalisation (K); refermer l'extrémité aval (Kox) de la portion accessible (Ko) de la canalisation (K); et rouvrir le robinet de branchement (RB).

## Claims

1. A tool set to set-up, in a fluid piping (K), a flow monitoring device (1) comprising a hollow body (11) provided with an upstream end (111) and a downstream end (112), a valve (12) integrated to the hollow body (11) and designed to close in response to a fluid flow rate in the piping (K) exceeding a maximal boundary flow rate, a cup-type seal member (13) arranged at the downstream end (112) of hollow body (11), and a plurality of elastic legs (14) connected to the hollow body (11) between the upstream (111) and downstream (112) ends of this hollow body (11) and designed to elastically distend at their free ends (140) turned towards the downstream end (112) of the hollow body (11), once the device (1) is installed in the piping, this tool set comprising a sheath (2) in which the device (1) is initially inserted from the downstream end (112) of hollow body (1) in a preparatory configuration in which the seal (13) and legs (14) are radially folded and elastically stressed into the sheath (2), this tool set comprising a hollow semi-flexible hose (31), a pump (32) connected to a first end (311) of the hose (31) and adapted to monitor the pressure prevailing inside the hose, a manometer (321) subjected to the pressure prevailing inside the hose (31), a jack (33) installed at a second end (312) of the hose (31) and comprising a cylinder (331) subjected to the pressure prevailing inside the hose (31) and a piston (332), the sheath (2) being screwed on the cylinder (331) of this jack (33) on the downstream end (112) side of said device (1), a support member (4) a first end (41) of which bears a metric counter (411) slidingly crossed by the hose (31) and a second end (42) of which is also slidingly crossed by the hose (31), and an introduction airlock (5) comprising at least one pipe (50) crossed by the end (312) of hose (31) bearing the jack (33) and exhibiting at least one rectilinear and rigid terminal guiding section (500), a first end (51) of the pipe (50) being carried by the support member (4) and comprising a retaining ring (511) such as a stuffing box slidingly crossed by the hose (31), and a second end (52) of the pipe (50) comprising the terminal guiding section (500) and being adapted to be sealingly screwed on an accessible portion (Ko) of piping (K) arranged in the extension of this terminal guiding section (500), the hose (31) exhibiting, between the two ends (41, 42) of the support member (4), a longitudinal section (310) accessible and able to be pushed or pulled to introduce said jack (33) into said piping (K) or retrieve it therefrom, and the piston (332) of said jack (33) adopting in the cylinder (331) of said jack (33) a position which depends on the pressure inside the hose (31) and being adapted to selectively eject the device (1) out of the sheath (2).

2. The tool set according to claim 1, **characterized in that** it further comprises at least one bypass (6), a shut-off valve (63) and two test valves (71, 72), **in that** the bypass (6) exhibits two ends (61, 62), the first (61) of which is connected to the airlock (5), **in that** the shut-off valve (63) is fitted on the bypass (6) between the ends (61, 62) of this bypass (6), **in that** the two test valves (71,72) connect, parallely to each other, the second end (62) of said bypass (6) to atmospheric pressure, and **in that** the first and second test valves (71, 72) exhibit different, respective first and second passage sections, the first of which allows a fluid flow rate at most equal to the maximal boundary flow rate from piping (K), and the second of which allows a fluid flow rate higher that the maximal boundary flow rate from piping (K).

3. The tool set according to claim 2, **characterized in that** the pipe (50) of airlock (5) exhibits an elbow (53) extending between the retaining ring (511) and the terminal guiding section (500), and **in that** the bypass (6) is connected to said airlock (5) between the retaining ring (511) and the elbow (53).

4. The tool set according to any one of claims 2 and 3, **characterized in that** the bypass (6) is provided with an inflation valve (64) arranged between the first end (61) of bypass (6) and the shut-off valve (63).

5. The tool set according to any one of claims 2 to 4, **characterized in that** the pipe (50) of airlock (5) exhibits, spaced apart from its terminal guiding section (500), an inner stopper (54) and an inner diameter providing both a housing to the jack (33) as well as a fluid flow path around the jack (33), and **in that** the inner stopper (54) blocks the movement of said jack (33) towards the retaining ring (511) without blocking the fluid flow.

6. The tool set according to any one of the preceding claims, **characterized in that** it comprises a chassis (81) and a spool (82) on which said hose (31) is wound, this spool (82) being rotationally supported on the chassis (81).

7. The tool set according to any one of the preceding claims, **characterized in that** it further comprises a collapsible rod (83) designed to adapt to the support member (4) and constitute a stand for this support member (4).

8. The tool set according to claims 6 and 7, **characterized in that** the chassis (81) belongs to a wheel mallet (8) and **in that** the collapsible rod (83) is designed to adapt to the mallet (8) and constitute a handle for facilitating the displacement of this mallet (8).

9. The tool set according to any one of the preceding claims, **characterized in that** the jack (33) exhibits at least one joint (333).

10. A method for implementing the tool set according to any one of the preceding claims for inserting, in a fluid piping (K), a flow monitoring device (1) partially introduced under radial stress in a sheath (2), **characterized in that** it comprises the steps of: checking the absence of flow monitoring device (1) in the piping; closing the branch valve (RB) which the accessible portion (Ko) of piping (K) is provided with; opening a downstream end (Kox) of the accessible portion (Ko) of piping (K) arranged downstream from the branch valve (RB); screwing the second end (52) of the pipe (50) of airlock (5) on the downstream end (Kox) of the accessible portion (Ko) of piping (K); pushing the hose (31) into the piping (K) to make the flow monitoring device (1) progress through the branch valve (RB) and the accessible portion (Ko); detecting a resistance against the progression of device (1), which indicates a surpassing of its set-up point; pulling the hose (31) over a predetermined distance to bring said device (1) to its set-up point; actuating the pump (32) in order to increase the pressure in said hose (31); waiting a predetermined time period; and pulling said hose (31) again in order to insert jack (33) in airlock (5).

11. The method according to claim 10 for implementing the tool set according to any one of claims 1 to 9 combined with claims 2 and 5, **characterized in that** the pulling step of hose (31) is carried out until the jack (33) is blocked by the inner stopper (54), and **in that** it further comprises the steps of: opening the shut-off valve (63) of said bypass (6); opening the first test valve (71) ; checking that the fluid is flowing in piping (K) and reaches this first test valve (71) ; opening the second test valve (72); checking that the fluid is no longer flowing in piping (K) and does not reach the second test valve (72); and closing test valves (71, 72) and the shut-off valve (63) of said bypass (6).

12. The method according to claim 11 for implementing the tool set according to any one of claims 1 to 9 combined with claims 2, 4 and 5, **characterized in that** it further comprises the steps of injecting fluid in airlock (5) through the inflation valve (64) until reaching a predetermined pressure in airlock (5); opening the shut-off valve (63) of said bypass (6); opening the first test valve (71); checking that the fluid is flowing in said piping (K) and reaches this first test valve (71); closing the first test valve (71) and the shut-off valve (63) of said bypass (6); closing the branch valve (RB) of the accessible portion (Ko) of piping (K); unscrewing the second end (52) of pipe (50) of airlock (5) from the downstream end (Kox) of the accessible portion (Ko) of piping (K); closing the downstream end (Kox) of the accessible portion (Ko) of said piping (K); and opening the branch valve (RB) again.

## Patentansprüche

1. Arbeitsgerät zum Installieren, in einem Fluidkanal (K), einer Strömungs- Kontrolleinrichtung (1) mit einem Hohlkörper (11), der mit einem stromaufwärts liegenden Ende (111) und einem stromabwärts liegenden Ende (112) versehen ist, einem in den Hohlkörper (11) integrierten und sich in Abhängigkeit von einem Fluiddurchsatz in dem Kanal (K), der einen maximalen Grenzwert übersteigt, schließenden Ventil (12), einer Napfdichtung (13), die am stromabwärts liegenden Ende (112) des Hohlkörpers (11) angeordnet ist, und einer Mehrzahl von elastischen Klauen (14), die mit dem Hohlkörper (11) zwischen den stromaufwärts (111) und stromabwärts (112) liegenden Enden des Hohlkörpers (11) verbunden ist und zum elastischen Ausbauchen ihrer freien, zu dem stromabwärts liegenden Ende (112) des Hohlkörpers (11) gedrehten Enden (140) vorgesehen ist, wenn die Einrichtung (1) in dem Kanal installiert ist, wobei dieses Arbeitsgerät eine Hülse (2) umfasst, in welcher die Einrichtung (1) anfänglich über das stromabwärts liegende Ende (112) des Hohlkörpers (1) in einer vorbereiteten Konfiguration eingeführt wird, in welcher die Dichtung (13) und die Klauen (14) radial umgebogen und in der Hülse (2) elastisch gespannt sind, wobei dieses Arbeitsgerät umfasst ein halbflexibles hohles Kabel (31), eine mit einem ersten Ende (311) des Kabels (31) verbundene Pumpe, die dazu geeignet ist, den Druck im Inneren des Kabels zu steuern, einem Manometer (321), das dem im Inneren des Kabels (31) herrschenden Druck ausgesetzt ist, einem Stellglied (33), das an einem zweiten Ende (312) des Kabels (31) installiert ist und einen Zylinder (331) umfasst, der dem in dem Kabel (31) herrschenden Druck ausgesetzt ist, und einen Kolben (332), wobei die Hülse (2) auf den Zylinder (331) dieses Stellgliedes (33) in der Nähe des stromabwärts liegenden Endes (112) der Einrichtung (1) geschraubt ist, einem Halter (4), dessen erstes Ende (41) einen metrischen Zähler (411) trägt, der von dem Kabel (31) verschieblich durchfahren wird und dessen zweites Ende (42) von dem Kabel (31) auch verschieblich durchfahren wird, und einer Einführschleuse (5) mit wenigstens einem Rohr (50), das von dem das Stellglied (23) tragenden Ende (312) des Kabels (31) durchquert wird und wenigstens einen rechtwinkligen und starren Führungs-Endabschnitt (500) aufweist, wobei ein erstes Ende (51) des Rohrs (50) von dem Halter (4) getragen wird und eine Sperrmuffe (511) aufweist, wie eine vom Kabel (31) verschieblich durchquerte Stopfbüchse, und ein zweites Ende (22) des Rohrs (50) den Führungs- Endabschnitt (500) trägt, der in dichter Weise auf einen zugänglichen Bereich (Ko) des Kanals (K) geschraubt werden kann, der in der Verlängerung dieses Führungs- Endabschnitts (500) angeordnet ist, wobei das Kabel (31) zwischen den beiden Enden (41, 42) des Halters (4) einen Längsabschnitt (310) aufweist, der zugänglich und geeignet ist, gedrückt oder gezogen zu werden, um das Stellglied (33) in den Kanal (K) einzuführen oder aus diesem herauszuziehen, und wobei der Kolben (332) des Stellglieds (33) in dem Zylinder (331) des Stellglieds (33) eine Position einnimmt, die von dem Druck in dem Kabel (31) abhängt und dazu geeignet ist, die Einrichtung (1) aus der Hülse (2) selektiv auszudrücken.

2. Arbeitsgerät nach Anspruch 1, **dadurch gekennzeichnet, dass** dieses ferner umfasst wenigstens eine Abzweigung (6), einen Absperrhahn (63) und zwei Testhähne (71, 72), dass die Abzweigung (6) zwei Enden (61, 62) aufweist, von denen das erste (61) mit der Schleuse (5) verbunden ist, dass der Absperrhahn (63) auf der Abzweigung (6) zwischen den Enden (61, 62) dieser Abzweigung (6) installiert ist, dass die zwei Testhähne (61, 62) parallel zueinander das zweite Ende (62) der Abzweigung (6) mit Umgebungsdruck verbinden und dass der erste und der zweite Testhahn (61, 62) einen ersten und zweiten jeweils unterschiedlichen Durchgangsquerschnitt aufweisen, von denen der erste bei Herkunft aus dem Kanal (K) eine Fluiddurchsatz höchstens gleich dem maximalen Grenzwert zulässt und von denen der zweite bei Herkunft aus dem Kanal (K) einen Fluiddurchsatz größer als der maximale Grenzwert zulässt.

3. Arbeitsgerät nach Anspruch 2, **dadurch gekennzeichnet, dass** das Rohr (50) der Schleuse (5) eine Krümmung (53) aufweist, die sich zwischen der Sperrmuffe (511) und dem Führungs- Endabschnitt (500) erstreckt, und dass die Abzweigung (6) mit der Schleuse (5) zwischen der Sperrmuffe (511) und der Krümmung (53) verbunden ist.

4. Arbeitsgerät nach einem der Ansprüche 2 und 3, **dadurch gekennzeichnet, dass** die Abzweigung (6) mit einem Schlauchventil (64) versehen ist, das zwischen dem ersten Ende (61) der Abzweigung (6) und dem Absperrhahn (63) angeordnet ist.

5. Arbeitsgerät nach einem der Ansprüche 2 bis 4, **dadurch gekennzeichnet, dass** das Rohr (50) der Schleuse (5) aufweist in Abstand von seinem Führungs- Endabschnitt (500) eine Innenschulter (54) und einen Innendurchmesser, sowohl für eine Aufnahme des Stellgliedes (33) als auch für einen Zirkulationsweg des Fluids um das Stellglied (33) herum anbietet, und dass die Innenschulter (54) die Bewegung des Stellgliedes (33) in Richtung der Sperrmuffe (511) blockiert, ohne die Fluidzirkulation zu blockieren.

6. Arbeitsgerät nach einem der vorhergehenden Ansprüche, **dadurch gekennzeichnet, dass** dieses umfasst einen Unterbau (81) und einer Abwickeleinrichtung (82), auf welcher das Kabel (31) aufgewickelt ist, wobei die Abwickeleinrichtung (82) auf dem Unterbau (81) drehbar abgestützt ist.

7. Arbeitsgerät nach einem der vorhergehenden Ansprüche, **dadurch gekennzeichnet, dass** dieses ferner umfasst ein Teleskoprohr (83), das dazu vorgesehen ist, sich an den Halter (4) anzupassen und einen Fuß für diesen Halter (4) zu bilden.

8. Arbeitsgerät nach den Ansprüchen 6 und 7, **dadurch gekennzeichnet, dass** der Unterbau (81) zu einem Rollkoffer (8) gehört und dass das Teleskoprohr (83) dazu vorgesehen ist, sich an den Koffer (8) anzupassen und eine Griffstange zu bilden, welche die Verschiebung diese Koffers (8) erleichtert.

9. Arbeitsgerät nach einem der vorhergehenden Ansprüche, **dadurch gekennzeichnet, dass** das Stellglied (33) wenigstens ein Gelenk (333) aufweist.

10. Verfahren zur Anwendung des Arbeitsgeräts nach einem der vorhergehenden Ansprüche, um in einen Fluidkanal (K) eine Strömungs- Kontrolleinrichtung (1) einzuführen, die teilweise unter radialer Spannung in eine Hülse (2) eingeführt ist, **dadurch gekennzeichnet, dass** dieses die Schritte umfasst, bestehend aus: Verifizieren eines nicht Vorhandenseins einer Strömungs- Kontrolleinrichtung (1) in dem Kanal; Schließen des Verzweigungshahns (RB), mit dem der zugängliche Abschnitt (Ko) des Kanals (K) versehen ist; Öffnen eines stromabwärts liegenden Endes (Kox) des zugänglichen Bereichs (Ko) des Kanals (K), der stromabwärts des Verzweigungshahns (RB) angeordnet ist; Schrauben des zweiten Endes (52) des Rohrs (50) der Schleuse (5) auf das stromabwärts liegende Ende (Kox) des zugänglichen Bereichs (Ko) des Kanals (K); Schieben des Kabels (31) in den Kanal (K), um dort die Strömungs- Kontrolleinrichtung (1) durch den Verzweigungshahn (RB) und den zugänglichen Bereich (Ko) vor zu schieben; Erfassen eines Widerstands gegenüber dem Vorschub der Einrichtung (1), was aufschlussreich ist für ein Vorbeifahren an seinem Installationspunkt ist; Ziehen des Kabels (31) um eine vorbestimmte Strecke, um die Einrichtung (1) an ihrem Installationspunkt zu platzieren; Betätigen der Pumpe (32), um den Druck in dem Kabel (31) zu erhöhen; Warten über eine vorbestimmte Zeitspanne; und ziehen des Kabels (31) aufs Neue, um das Stellglied (33) in die Schleuse (5) zurückzuziehen.

11. Verfahren nach Anspruch 10 zur Anwendung des Arbeitsgeräts nach einem der Ansprüche 1 bis 9 kombiniert mit den Ansprüchen 2 und 5, **dadurch gekennzeichnet, dass** der Traktionsvorgang des Kabels (31) solange bewirkt wird, bis dass das Stellglied (33) durch die Innenschulter (54) blockiert wird, und dass dieses ferner die Schritte umfasst, bestehend aus: Öffnen des Absperrhahns (63) der Abzweigung (6); Öffnen des ersten Testhahns (71); Verifizieren, dass das Fluid in dem Kanal (K) zirkuliert und den ersten Testhahn (71) erreicht; Öffnen des zweiten Testhahns (72); Verifizieren, dass das Fluid nicht mehr in dem Kanal (K) zirkuliert und den zweiten Testhahn (72) nicht erreicht; und Wiederverschließen der Testhähne (71; 72) und des Sperrhahns (63) der Abzweigung (6).

12. Verfahren nach Anspruch 11 zur Anwendung des Arbeitsgeräts nach einem der Ansprüche 1 bis 9, kombiniert mit den Ansprüchen 2, 4 und 5, **dadurch gekennzeichnet, dass** dieses ferner umfasst die Schritte bestehend aus: Einspritzen des Fluids in die Schleuse (5) durch das Schlauchventil (64), bis dass ein vorbestimmter Druck in der Schleuse (5) erreicht wird; Öffnen des Absperrhahns (63)der Abzweigung (6); Öffnen des ersten Testhahns (71); Verifizieren, dass das Fluid in dem Kanal (K) zirkuliert und den ersten Testhahn (71) erreicht; Wiederverschließen des ersten Testhahns (71) und des Absperrhahns (63) der Abzweigung; Wiederverschließen des Verzweigungshahns (RB) des zugänglichen Bereichs (Ko) des Kanals (K); Abschrauben des zweiten Endes (52) des Rohrs (50) von der Schleuse (5) vom stromabwärts liegenden Ende (Kox) des zugänglichen Bereichs (Ko) des Kanals (K); Wiederverschließen des stromabwärts liegenden Endes (Kox) des zugänglichen Bereichs (Ko) und des Kanals (K); und wieder Öffnen des Verzweigungshahns (RB).
